# EUROPEAN PATENT APPLICATION

(11) **EP 2 778 850 A1**
(43) Date of publication of application: **17.09.2014**
(21) Application number: 14159278.2
(22) Date of filing: 12.03.2014
(51) Int. Cl.: G06F 3/01

(54) **Systems and methods for parameter modification of haptic effects**

(30) Priority: 15.03.2013 US 201313835665
(71) Applicant: Immersion Corporation, San Jose, CA 95134 (US)
(72) Inventor: Birnbaum, David, Oakland, CA California 94607 (US); Weddle, Amaya, San Jose, CA California 95125 (US)
(74) Representative: Phillips & Leigh

(57) **Abstract**

Systems and methods for parameter modification of one or more haptic effects are disclosed. In one embodiment an electronic device determines a haptic effect. The electronic device can receive an input signal indicating an environmental condition. The input signal may be generated by an environmental sensor. The environmental condition may be a temperature, vibration, noise, movement, trait of a user such as a user's weight, gender, age, height, another suitable trait of a user, another suitable environmental condition, or a combination thereof. The electronic device may modify the haptic effect based at least in part on the input signal. The electronic device can generate a haptic output signal based at least in part on the modified haptic effect. The haptic output signal may be configured to cause a haptic output device to output the modified haptic effect. The electronic device may output the haptic output signal.

## Description

### FIELD OF THE INVENTION

The present disclosure relates generally to systems and methods for parameter modification of haptic effects.

### BACKGROUND

With the increase in popularity of handheld devices, especially mobile phones having touch-sensitive surfaces (e.g., touch screens), physical tactile sensations, which have traditionally been provided by mechanical buttons, are no longer present in many such devices. Instead, haptic effects may be output by handheld devices to alert the user to various events. Such haptic effects may include vibrations to indicate a button press, an incoming call, or a text message, or to indicate error conditions.

### SUMMARY

Embodiments provide systems and methods for parameter modification of haptic effects. For example, one disclosed method comprises determining, by an electronic device, a haptic effect; receiving, by the electronic device, an input signal indicating an environmental condition; modifying, by the electronic device, the haptic effect based at least in part on the input signal; generating, by the electronic device, a haptic output signal based at least in part on the modified haptic effect, the haptic output signal configured to cause a haptic output device to output the modified haptic effect; and outputting, by the electronic device, the haptic output signal. In another embodiment, a computer readable medium comprises program code for causing a processor to perform such a method.

These illustrative embodiments are mentioned not to limit or define the invention, but rather to provide examples to aid understanding thereof. Illustrative embodiments are discussed in the Detailed Description, which provides further description of the invention. Advantages offered by various embodiments of this invention may be further understood by examining this specification.

### BRIEF DESCRIPTION OF THE DRAWINGS

The accompanying drawings, which are incorporated into and constitute a part of this specification, illustrate one or more examples of embodiments and, together with the description of example embodiments, serve to explain the principles and implementations of the embodiments.
Figure 1 illustrates an electronic device for parameter modification of one or more haptic effects in accordance with an embodiment of the present invention;
Figure 2 illustrates an electronic device for parameter modification of one or more haptic effects in accordance with an embodiment of the present invention;
Figure 3 illustrates a system diagram depicting computing devices for parameter modification of one or more haptic effects in a computing environment in accordance with an embodiment of the present invention; and
Figure 4 illustrates a flow chart directed to a method of parameter modification of one or more haptic effects based at least in part on environmental condition(s) in accordance with an embodiment of the present invention.

### DETAILED DESCRIPTION

Example embodiments are described herein in the context of systems and methods for parameter modification of haptic effects. Those of ordinary skill in the art will realize that the following description is illustrative only and is not intended to be in any way limiting. Other embodiments will readily suggest themselves to such skilled persons having the benefit of this disclosure. Reference will now be made in detail to implementations of example embodiments as illustrated in the accompanying drawings. The same reference indicators will be used throughout the drawings and the following description to refer to the same or like items.

In the interest of clarity, not all of the routine features of the implementations described herein are shown and described. It will, of course, be appreciated that in the development of any such actual implementation, numerous implementation-specific decisions must be made in order to achieve the developer's specific goals, such as compliance with application- and business-related constraints, and that these specific goals will vary from one implementation to another and from one developer to another.

### Illustrative Device & Embodiment

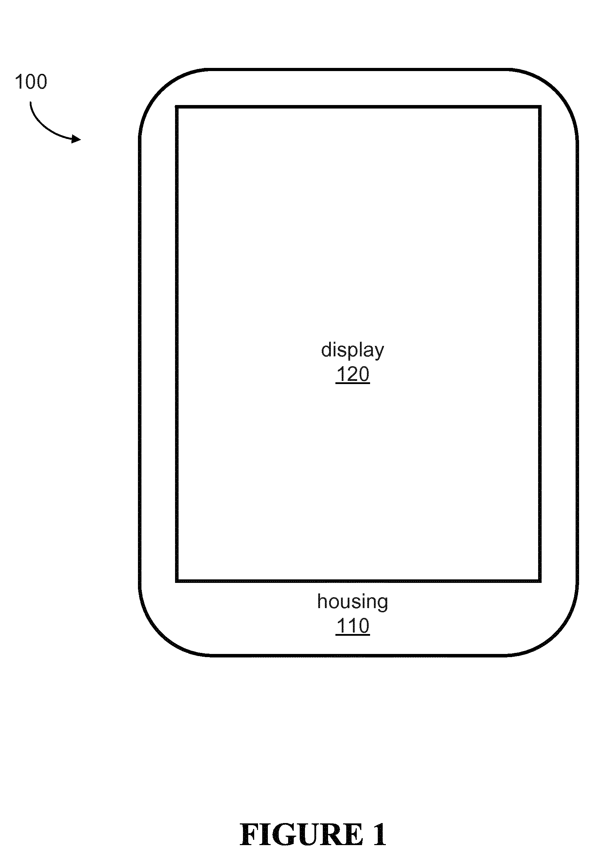

Figure 1 illustrates an illustrative electronic device 100 for parameter modification of haptic effects. In some embodiments, electronic device 100 is a portable, handheld phone. As a user interacts with the phone and/or various events occur, the phone may output haptic effects to alert the user to the interactions and/or events. For example, the phone may determine a vibrational haptic effect when a phone call is received to alert the user of the electronic device 100 to the phone call. In addition, in this embodiment, the electronic device 100 receives one or more environmental conditions.

For example, the phone may have a microphone and the ability to determine a level of noise based at least in part on information received from the microphone. In this embodiment, if the level of noise is above a predetermined threshold, then an intensity parameter corresponding to the vibrational haptic effect may be increased. Thus, in embodiments, a haptic effect is modified or otherwise configured based at least in part on one or more environmental conditions. Once one or more parameters corresponding to the determined haptic effect have been modified or otherwise configured, the phone can generate a haptic output signal configured to output the modified haptic effect.

In the illustrative embodiment, the haptic output signal generated when the noise is above the predetermined level is configured to cause a haptic output device to output a haptic effect that is greater than or otherwise more intense than a haptic output signal generated when the noise is below the predetermined level. Thus, in this embodiment, the intensity parameter for the haptic effect is based at least in part on the noise level detected by the microphone and the generated haptic output signal is based at least in part on the intensity parameter. Once the haptic output signal has been generated, the signal can be sent to one or more haptic output devices. Numerous other embodiments are disclosed herein and variations are within the scope of this disclosure.

This illustrative example is given to introduce the reader to the general subject matter discussed herein. The invention is not limited to this example. The following sections describe various additional non-limiting embodiments and examples of devices, systems, and methods for parameter modification of haptic effects.

### Illustrative Device

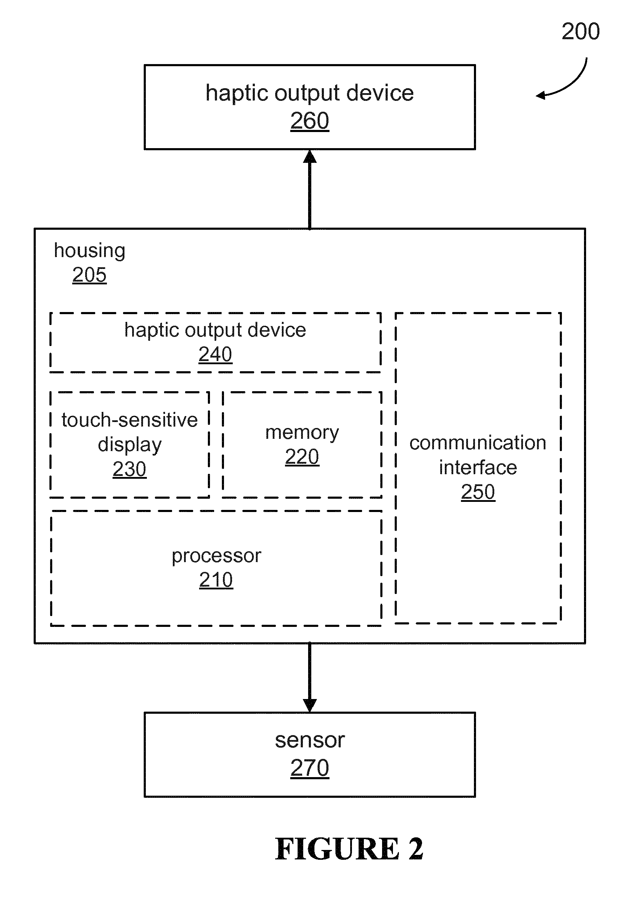

Figure 2 illustrates an electronic device 200 for parameter modification of haptic effects according to one embodiment of the present invention. In the embodiment shown in Figure 2, the electronic device 200 comprises a housing 205, a processor 210, a memory 220, a touch-sensitive display 230, a haptic output device 240, a communication interface 250, and a sensor 270. In addition, the electronic device 200 is in communication with haptic output device 260, which may be optionally coupled to or incorporated into some embodiments. The processor 210 is in communication with the memory 220 and, in this embodiment, both the processor 210 and the memory 220 are disposed within the housing 205. The touch-sensitive display 230, which comprises or is in communication with a touch-sensitive surface, is partially disposed within the housing 205 such that at least a portion of the touch-sensitive display 230 is exposed to a user of the electronic device 200. In some embodiments, the touch-sensitive display 230 may not be disposed within the housing 205. For example, the electronic device 200 may be connected to or otherwise communicate with a touch-sensitive display 230 disposed within a separate housing. In some embodiments, the housing 205 may comprise two housings that are slidably coupled to each other, pivotably coupled to each other, or releasably coupled to each other. In other embodiments, the housing 205 may comprise any number of housings.

In the embodiment shown in Figure 2, the touch-sensitive display 230 is in communication with the processor 210 and is configured to provide signals to the processor 210 and/or the memory 220 and to receive signals from the processor 210 and/or memory 220. The memory 220 is configured to store program code or data, or both, for use by the processor 210, which is configured to execute program code stored in memory 220 and to transmit signals to and receive signals from the touch-sensitive display 230. In the embodiment shown in Figure 2, the processor 210 is in communication with the communication interface 250 and is configured to receive signals from the communication interface 250 and to output signals to the communication interface 250 to communicate with other components or devices such as one or more electronic devices. In addition, the processor 210 is in communication with haptic output device 240 and haptic output device 260 and is further configured to output signals to cause haptic output device 240 or haptic output device 260, or both, to output one or more haptic effects.

Furthermore, the processor 210 is in communication with sensor 270 and is configured to receive signals from sensor 270. For example, processor 210 may receive one or more signals associated with various environmental conditions from sensor 270. As another example, processor 210 can receive sensor information from one or more sensors, such as sensor 270, to derive or otherwise determine one or more environmental conditions. Environmental conditions can include, but are not limited to a temperature, a vibration, a noise, a movement, a trait of a user (e.g., a weight, a gender, a height, an age, an ethnicity, etc.), an ambient condition, a proxy, any other suitable environmental condition, or a combination thereof. Numerous other embodiments are disclosed herein and variations are within the scope of this disclosure.

The processor 210 may then utilize the information regarding the environmental condition or conditions that it receives from one or more sensors, such as sensor 270, to determine one or more modifications to make to a haptic effect. For example, the processor 210 may determine to increase or decrease a parameter associated with a determined haptic effect based at least in part on the sensor information received from sensor 270. For instance, if the ambient noise in a room is above a threshold level, then a parameter corresponding to a predetermined haptic effect may be increased. In addition or alternatively, the processor 210 may change from one determined haptic effect to another haptic effect based at least in part on information received from sensor 270.

Once the haptic effect has been modified, the processor 210 can generate a haptic output signal based at least in part on one or more modified or otherwise configured haptic effects. In one embodiment, the processor 210 determines which haptic output device(s) to send a haptic output signal to based at least in part on information received from sensor 270. For example, if sensor 270 is a microphone, then a haptic output signal may be sent to a first haptic output device if the noise from the microphone is below a threshold level and may send the haptic output signal to a second haptic output device if the noise from the microphone is above the threshold level. In some embodiments, the second haptic output device is configured to output a haptic effect that is more intense than a haptic effect output by the first haptic output device. In some embodiments, the processor 210 sends one or more haptic output signals to one or more haptic output devices. For example, processor 210 may output a first haptic output signal to haptic output device 240 and a second haptic output device 260. These two haptic output signals may be the same or different. Numerous other embodiments are disclosed herein and variations are within the scope of this disclosure.

The device illustrated in Figure 2 is merely illustrative, and in various other embodiments, the electronic device 200 may comprise or be in communication with fewer or additional components and/or devices than shown in Figure 2. For example, other user input devices such as a mouse, a keyboard, a camera and/or other input device(s) may be comprised within the electronic device 200 or be in communication with the electronic device 200. As another example, electronic device 200 may comprise or otherwise be in communication with one, two, three, or more sensors and/or one, two, three, or more haptic output devices. In another example, electronic device 200 may not comprise a communication interface 250 in one embodiment. As yet another example, electronic device 200 may not be in communication with haptic output device 260 in an embodiment.

Various other components may also be modified. For example, in some embodiments, sensor 270 is partially or fully disposed within housing 205. As another example, sensor 270 may be disposed within the housing 205 of the electronic device 200. In one embodiment, the electronic device 200 is not in communication with haptic output device 260 and does not comprise communication interface 250. In another embodiment, the electronic device 200 does not comprise a touch-sensitive display 230 or a communication interface 250, but comprises a touch-sensitive surface and is in communication with an external display. In other embodiments, the electronic device 200 may not comprise or be in communication with a haptic output device at all. Thus, in various embodiments, the electronic device 200 may comprise or be in communication with any number of components, such as in the various embodiments disclosed herein as well as variations that would be apparent to one of skill in the art.

The electronic device 200 can be any device that is capable of receiving user input. For example, the electronic device 200 in Figure 2 includes a touch-sensitive display 230 that comprises a touch-sensitive surface. In some embodiments, a touch-sensitive surface may be overlaid on the touch-sensitive display 230. In other embodiments, the electronic device 200 may comprise or be in communication with a display and a separate touch-sensitive surface. In still other embodiments, the electronic device 200 may comprise or be in communication with a display and may comprise or be in communication with other user input devices, such as a mouse, a keyboard, buttons, knobs, slider controls, switches, wheels, rollers, other manipulanda, or a combination thereof.

In some embodiments, one or more touch-sensitive surfaces may be included on or disposed within one or more sides of the electronic device 200. For example, in one embodiment, a touch-sensitive surface is disposed within or comprises a rear surface of the electronic device 200. In another embodiment, a first touch-sensitive surface is disposed within or comprises a rear surface of the electronic device 200 and a second touch-sensitive surface is disposed within or comprises a side surface of the electronic device 200. In some embodiments, the electronic device 200 may comprise two or more housing components, such as in a clamshell arrangement or in a slideable arrangement. For example, one embodiment comprises an electronic device 200 having a clamshell configuration with a touch-sensitive display disposed in each of the portions of the clamshell. Furthermore, in embodiments where the electronic device 200 comprises at least one touch-sensitive surface on one or more sides of the electronic device 200 or in embodiments where the electronic device 200 is in communication with an external touch-sensitive surface, the display 230 may or may not comprise a touch-sensitive surface. In some embodiments, one or more touch-sensitive surfaces may have a flexible touch-sensitive surface. In other embodiments, one or more touch-sensitive surfaces may be rigid. In various embodiments, the electronic device 200 may comprise both flexible and rigid touch-sensitive surfaces.

The housing 205 of the electronic device 200 shown in Figure 2 provides protection for at least some of the components electronic device 200. For example, the housing 205 may be a plastic casing that protects the processor 210 and memory 220 from foreign articles such as rain. In some embodiments, the housing 205 protects the components in the housing 205 from damage if the electronic device 200 is dropped by a user. The housing 205 can be made of any suitable material including but not limited to plastics, rubbers, or metals. Various embodiments may comprise different types of housings or a plurality of housings. For example, in some embodiments, electronic device 200 may be a portable device, handheld device, toy, gaming console, handheld video game system, gamepad, game controller, desktop computer, portable multifunction device such as a cell phone, smartphone, personal digital assistant (PDA), eReader, portable reading device, handheld reading device, laptop, tablet computer, digital music player, remote control, medical instrument, etc. In embodiments, the electronic device 200 may be embedded in another device such as a vehicle, wrist watch, other jewelry, arm band, gloves, etc. Thus, in embodiments, the electronic device 200 is wearable. In an embodiment, the electronic device 200 is embedded in another device such as, for example, the console of a car or a steering wheel. Numerous other embodiments are disclosed herein and variations are within the scope of this disclosure.

In the embodiment shown in Figure 2, the touch-sensitive display 230 provides a mechanism for a user to interact with the electronic device 200. For example, the touch-sensitive display 230 detects the location or pressure, or both, of a user's finger in response to a user hovering over, touching, or pressing the touch-sensitive display 230 (all of which may be referred to as a contact in this disclosure). In one embodiment, a contact can occur through the use of a camera. For example, a camera may be used to track a viewer's eye movements as the reader views the content displayed on the display 230 of the electronic device 200. In this embodiment, haptic effects may be triggered based at least in part on the viewer's eye movements. For example, a haptic effect may be output when a determination is made that the viewer is viewing content at a particular location of the display 230. In some embodiments, the touch-sensitive display 230 may comprise, be connected with, or otherwise be in communication with one or more sensors that determine the location, pressure, a size of a contact patch, or any of these, of one or more contacts on the touch-sensitive display 230. For example, in one embodiment, the touch-sensitive display 230 comprises or is in communication with a mutual capacitance system. In another embodiment, the touch-sensitive display 230 comprises or is in communication with an absolute capacitance system. In some embodiments, the touch-sensitive display 230 may comprise or be in communication with a resistive panel, a capacitive panel, infrared LEDs, photodetectors, image sensors, optical cameras, or a combination thereof. Thus, the touch-sensitive display 230 may incorporate any suitable technology to determine a contact on a touch-sensitive surface such as, for example, resistive, capacitive, infrared, optical, thermal, dispersive signal, or acoustic pulse technologies, or a combination thereof. In embodiments, a determined haptic effect is modified or otherwise configured based at least in part on environmental conditions and/or other information received from one or more sensors that can be used to determine one or more environmental conditions. For example, an intensity parameter of a haptic effect may be increased or decreased based on one or more environmental conditions.

In the embodiment shown in Figure 2, haptic output devices 240 and 260 are in communication with the processor 210 and are configured to provide one or more haptic effects. For example, in one embodiment, when an actuation signal is provided to haptic output device 240, haptic output device 260, or both, by the processor 210, the respective haptic output device(s) 240, 260 outputs a haptic effect based on the actuation signal. For example, in the embodiment shown, the processor 210 is configured to transmit a haptic output signal to haptic output device 240 comprising an analog drive signal. In some embodiments, the processor 210 is configured to transmit a command to haptic output device 260, wherein the command includes parameters to be used to generate an appropriate drive signal to cause the haptic output device 260 to output the haptic effect. In other embodiments, different signals and different signal types may be sent to each of one or more haptic output devices. For example, in some embodiments, a processor may transmit low-level drive signals to drive a haptic output device to output a haptic effect. Such a drive signal may be amplified by an amplifier or may be converted from a digital to an analog signal, or from an analog to a digital signal using suitable processors or circuitry to accommodate the particular haptic output device being driven.

A haptic output device, such as haptic output devices 240 or 260, can be any component or collection of components that is capable of outputting one or more haptic effects. For example, a haptic output device can be one of various types including, but not limited to, an eccentric rotational mass (ERM) actuator, a linear resonant actuator (LRA), a piezoelectric actuator, a voice coil actuator, an electro-active polymer (EAP) actuator, a memory shape alloy, a pager, a DC motor, an AC motor, a moving magnet actuator, an E-core actuator, a smartgel, an electrostatic actuator, an electrotactile actuator, a deformable surface, an electrostatic friction (ESF) device, an ultrasonic friction (USF) device, or any other haptic output device or collection of components that perform the functions of a haptic output device or that are capable of outputting a haptic effect. Multiple haptic output devices or different-sized haptic output devices may be used to provide a range of vibrational frequencies, which may be actuated individually or simultaneously. Various embodiments may include a single or multiple haptic output devices and may have the same type or a combination of different types of haptic output devices. In some embodiments, one or more haptic output devices are directly or indirectly in communication with electronic device, such as via wired or wireless communication. In one embodiment, the electronic device can be placed in a vehicle or is integrated into a vehicle and one or more haptic output devices are embedded into the vehicle. For example, one or more haptic output devices may be embedded in a seat, steering wheel, pedal, etc. of the vehicle.

In various embodiments, one or more haptic effects may be produced in any number of ways or in a combination of ways. For example, in one embodiment, one or more vibrations may be used to produce a haptic effect, such as by rotating an eccentric mass or by linearly oscillating a mass. In some such embodiments, the haptic effect may be configured to impart a vibration to the entire electronic device or to only one surface or a limited part of the electronic device. In another embodiment, friction between two or more components or friction between at least one component and at least one contact may be used to produce a haptic effect, such as by applying a brake to a moving component, such as to provide resistance to movement of a component or to provide a torque. In order to generate vibration effects, many devices utilize some type of actuator and/or other haptic output device. Known haptic output devices used for this purpose include an electromagnetic actuator such as an Eccentric Rotating Mass ("ERM") in which an eccentric mass is moved by a motor, a Linear Resonant Actuator ("LRA") in which a mass attached to a spring is driven back and forth, or a "smart material" such as piezoelectric, electro-active polymers or shape memory alloys.

In other embodiments, deformation of one or more components can be used to produce a haptic effect. For example, one or more haptic effects may be output to change the shape of a surface or a coefficient of friction of a surface. In an embodiment, one or more haptic effects are produced by creating electrostatic forces and/or ultrasonic forces that are used to change friction on a surface. In other embodiments, an array of transparent deforming elements may be used to produce a haptic effect, such as one or more areas comprising a smartgel. Haptic output devices also broadly include non-mechanical or non-vibratory devices such as those that use electrostatic friction (ESF), ultrasonic surface friction (USF), or those that induce acoustic radiation pressure with an ultrasonic haptic transducer, or those that use a haptic substrate and a flexible or deformable surface, or those that provide projected haptic output such as a puff of air using an air jet, and so on. In some embodiments, a haptic effect is a kinesthetic effect. U.S. Patent Application No. 13/092,484 describes ways that one or more haptic effects can be produced and describes various haptic output devices. The entirety of U.S. Patent Application No. 13/092,484, filed April 22, 2011, is hereby incorporated by reference.

In Figure 2, the communication interface 250 is in communication with the processor 210 and provides wired or wireless communications, from the electronic device 200 to other components or other devices. For example, the communication interface 250 may provide wireless communications between the electronic device 200 and a wireless sensor or a wireless actuation device. In some embodiments, the communication interface 250 may provide communications to one or more other devices, such as another electronic device 200, to allow users to interact with each other at their respective devices. The communication interface 250 can be any component or collection of components that enables the multi-pressure touch-sensitive input electronic device 200 to communicate with another component or device. For example, the communication interface 250 may comprise a PCI network adapter, a USB network adapter, or an Ethernet adapter. The communication interface 250 may communicate using wireless Ethernet, including 802.11 a, g, b, or n standards. In one embodiment, the communication interface 250 can communicate using Radio Frequency (RF), Bluetooth, CDMA, TDMA, FDMA, GSM, WiFi, satellite, or other cellular or wireless technology. In other embodiments, the communication interface 250 may communicate through a wired connection and may be in communication with one or more networks, such as Ethernet, token ring, USB, Fire Wire 1394, fiber optic, etc. In some embodiments, electronic device 200 comprises a single communication interface 250. In other embodiments, electronic device 200 comprises two, three, four, or more communication interfaces. Thus, in embodiments, electronic device 200 can communicate with one or more components and/or devices through one or more communication interfaces. In other embodiments, an electronic device 200 may not comprise a communication interface 250.

In Figure 2, the sensor 270 is in communication with the processor 210 and provides sensor information to the processor 210. For example, sensor 270 may provide one or more environmental conditions to the processor 210. The sensor 270 may provide an input signal indicating one or more environmental conditions. The embodiment shown in Figure 2 depicts a single sensor 270. In some embodiments, multiple sensors can be used. Additionally, a sensor may be housed in the same component as the other components of the electronic device 200 or in a separate component. For example, in some embodiments, the processor 210, memory 220, and sensor 270 are all comprised in an electronic device 200, such as a portable music player, a portable telephone, and/or a wearable device. In some embodiments, a sensor is placed in component separate from another component that houses the memory and/or processor. For instance, a wearable sensor may be in communication with the processor and memory or an electronic device via a wired or wireless connection.

Sensor 270 may comprise any number and/or type of sensing components. For example, sensor 270 can comprise an accelerometer and/or gyroscope. A non-limiting list of examples of sensors and environmental conditions is provided below:

**Table 1: Exemplary Sensors and Conditions**

| **Sensor** | **Environmental Condition Sensed** |
|---|---|
| Accelerometer | Force in one, two, or three directions |
| Altimeter | Altitude |
| Thermometer | Ambient temperature; user body temperature |
| Heart rate monitor | Heart rate of device user |
| Skin resistance monitor | Skin resistance of device user |
| Oxygen sensor | Oxygen use of device user |
| Audio sensor / microphone | Ambient audio and/or audio generated by device user |
| Photosensor | Ambient light |
| IR/Photosensor | User eye movement, position, body temperature |
| Hygrometer | Relative humidity |
| Speedometer | Velocity |
| Pedometer/odometer | Distance traveled |
| Chronometer | Time of day, date |
| Weight | Mass or quantity of matter |

Environmental conditions can include any of the environmental conditions described herein, any other quantities representative of an ambient condition or force applied to or directed to the electronic device, other environmental conditions, or a combination thereof. In embodiments, environmental conditions are evaluated directly from sensor data and/or are processed by the electronic device to derive one or more environmental conditions. For example, acceleration data may be used to determine a device velocity and/or a pattern of motion. As another example, altitude data and/or acceleration data may be used to determine a vertical speed for the device or a state (e.g., climbing a hill, descending a hill, etc.). As a further example, physiological data such as heart rate, skin resistance, and other conditions can be used to determine a physiological state of a device user (e.g., awake, stressed, asleep, REM sleep, etc.). In embodiments, an environmental condition is an emotional state of a device user (e.g., happy, sad, scared, angry, excited, etc.). For example, information received from one or more sensors may be used by an electronic device to determine whether a user is happy and excited, scared and angry, or any other emotional state or combination of emotional states. Environmental conditions can include, but are not limited to a temperature, a vibration, a noise, a movement, a trait of a user (e.g., a weight, a gender, a height, an age, an ethnicity, etc.), an ambient condition, a proxy, any other suitable environmental condition, or a combination thereof. Use of one or more environmental conditions for modifying or otherwise configuring one or more haptic effects is disclosed herein. Numerous other embodiments are disclosed herein and variations are within the scope of this disclosure.

### Illustrative System

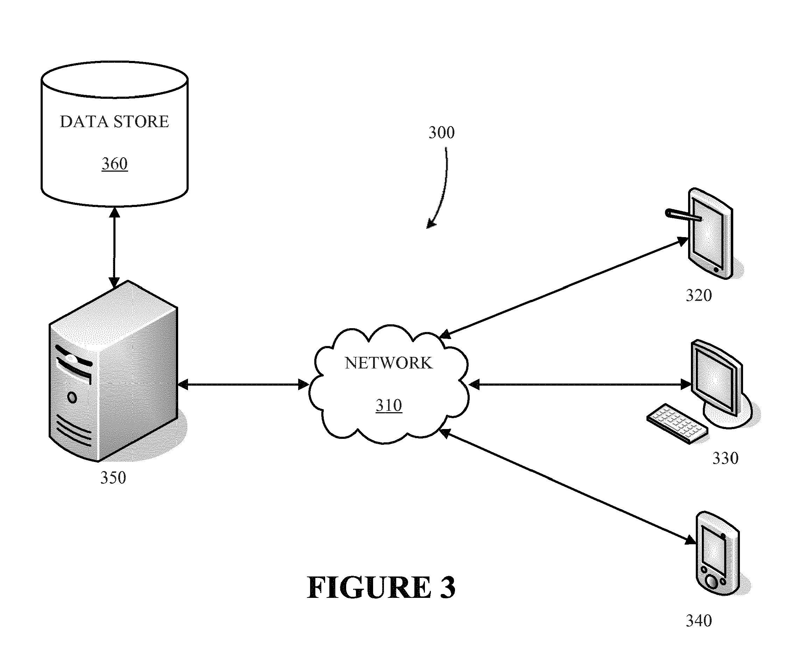

Figure 3 illustrates a system diagram depicting illustrative computing devices in an illustrative computing environment according to an embodiment. The system 300 shown in Figure 3 includes three electronic devices, 320-340, and a web server 350. Each of the electronic devices, 320-340, and the web server 350 are connected to a network 310. In this embodiment, each of the electronic devices, 320-340, is in communication with the web server 350 through the network 310. Thus, each of the electronic devices, 320-340, can send requests to the web server 350 and receive responses from the web server 350 through the network 310.

In an embodiment, the network 310 shown in Figure 3 facilitates communications between the electronic devices, 320-340, and the web server 350. The network 310 may be any suitable number or type of networks or links, including, but not limited to, a dial-in network, a local area network (LAN), wide area network (WAN), public switched telephone network (PSTN), a cellular network, a WiFi network, the Internet, an intranet or any combination of hard-wired and/or wireless communication links. In one embodiment, the network 310 is a single network. In other embodiments, the network 310 may comprise two or more networks. For example, the electronic devices 320-340 may be connected to a first network and the web server 350 may be connected to a second network and the first and the second network may be connected by a third network. Numerous other network configurations would be obvious to a person of ordinary skill in the art.

An electronic device may be capable of communicating with a network, such as network 310, and capable of sending and receiving information to and from another device, such as web server 350. For example, in Figure 3, one electronic device 320 is a tablet computer. The tablet computer 320 includes a touch-sensitive display and is able to communicate with the network 310 by using a wireless communication interface card. Another device that may be an electronic device 330 shown in Figure 3 is a desktop computer. The desktop computer 330 is in communication with a display and is able to connect to the network 330 through a wired network connection. The desktop computer 330 may be in communication with any number of input devices such as a keyboard or a mouse. In Figure 3, a mobile phone is an electronic device 340. The mobile phone 340 may be able to communicate with the network 310 over a wireless communications means using Bluetooth, CDMA, TDMA, FDMA, GSM, WiFi, or other cellular or wireless technology.

A device receiving a request from another device may be any device capable of communicating with a network, such as network 310, and capable of sending and receiving information to and from another device. For example, in the embodiment shown in Figure 3, the web server 350 may receive a request from another device (e.g., one or more of electronic devices 320-340) and may be in communication with network 310. A receiving device may be in communication with one or more additional devices, such as additional servers. For example, web server 350 in Figure 3 may be in communication with another server. In an embodiment, a web server may communicate with one or more additional devices to process a request received from a electronic device. For example, web server 350 in Figure 3 may be in communication with a plurality of additional servers, at least one of which may be used to process at least a portion of a request from any of the electronic devices 320-340. In one embodiment, web server 350 may be part of or in communication with a content distribution network (CDN).

One or more devices may be in communication with a data store. In Figure 3, web server 350 is in communication with data store 360. In embodiments, data store 360 is operable to receive instructions from web server 350 and/or other devices in communication with data store 360 and obtain, update, or otherwise process data in response to receiving the instructions. In one embodiment, an electronic device, such as tablet computer 320, comprises and/or is in communication with a data store. A data store, such as data store 360, may contain electronic content, such as an eBook or magazine, data items, user accounts, metadata, information associated with predefined haptic effects, information associated with predefined events, associations between predefined haptic effects and predefined events, user interactions, user history, information regarding occurrences of events, default parameters for one or more haptic effects, haptic profiles for one or more operating environments, one or more tactile models, minimum and/or maximum parameters for a haptic effect, information regarding generated predefined haptic effects, environmental conditions, parameters, parameter adjustments, correlations between environmental conditions and parameter adjustments, correlations between parameter adjustments and profiles and/or operating modes, correlations between tactile models and environmental conditions, correlations between tactile models and haptic effects, correlations between tactile models and parameters, correlations between profiles and/or operating modes and environmental conditions, other information usable to modify parameters of a haptic effect, information usable to determine an environmental condition, other information, or a combination thereof.

Data store 360 shown in Figure 3 can receive requests from web server 350 and send responses to web server 350. For example, web server 350 may receive a request from tablet computer 320 for a predefined haptic effect and a default intensity parameter. In response to receiving the request from the tablet computer 320, web server 350 may query data store 360 for the predefined haptic effect and the default intensity parameter for the predefined haptic effect. In response to receiving the request from the web server 350, data store 360 may send the web server 350 the predefined haptic effect and the default intensity parameter. The web server 350, can send the predefined haptic effect and the default intensity parameter to the tablet computer 320. The tablet computer 320 may modify the default intensity parameter for the predefined haptic effect based at least in part on one or more environmental conditions. For example, if one or more environmental conditions indicate that a greater or otherwise more intense haptic effect should be output, then the tablet computer 320 may increase the intensity parameter above the default intensity parameter. Similarly, if one or more environmental conditions indicate that a lesser or otherwise less intense haptic effect should be generated, then the table computer 320 may decrease the intensity parameter below the default intensity parameter. Numerous other embodiments are disclosed herein and variations are within the scope of this disclosure.

### Illustrative Method of Parameter Modification of Haptic Effects

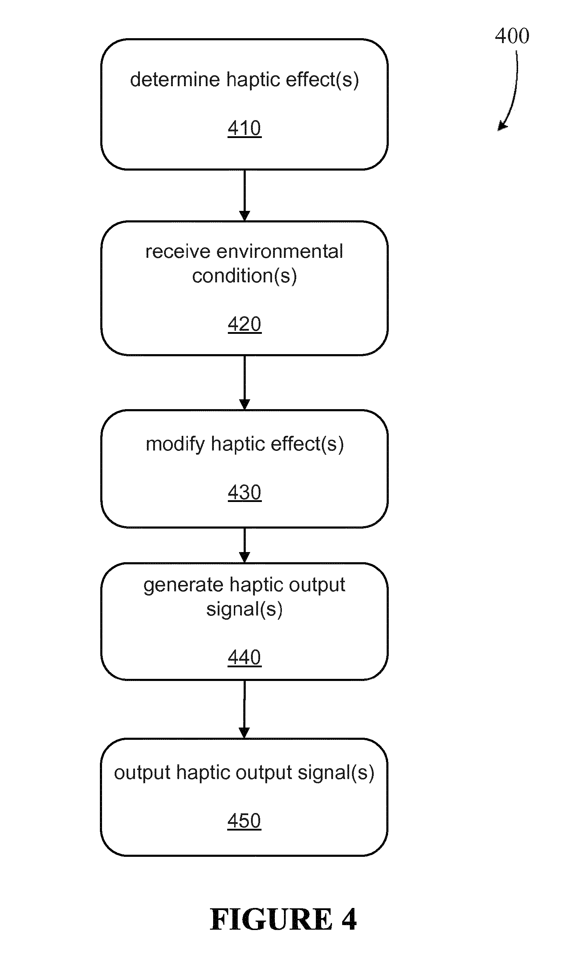

Figure 4 illustrates a flow chart directed to a method 400 of parameter modification of one or more haptic effects based at least in part on environmental condition(s) in accordance with an embodiment. The method 400 shown in Figure 4 will be described with respect to electronic device 200 shown in Figure 2. In embodiments, method 400 can be performed by one or more of the devices shown in system 300 in Figure 3.

The method 400 begins in block 410 when one or more haptic effects are determined. For example, electronic device 200 shown in Figure 2 may determine one or more haptic effects. As another example, tablet computer 320 shown in Figure 3 may determine one or more haptic effects.

One or more haptic effects may be determined by an electronic device 200 in any number of ways. In one embodiment, one or more haptic effects are determined by the electronic device 200 when an event occurs. For example, if the electronic device 200 has telephone capabilities, such as mobile phone 340 shown in Figure 3, then the electronic device 200 may determine one or more haptic effects when a phone call is received. As another example, if the electronic device 200 has data communication functionality, such as tablet computer 320 shown in Figure 3, then the electronic device may determine one or more haptic effects when an email is received. In other embodiments, one or more haptic effects are determined when a text message is received and/or a notification is received.

In one embodiment, one or more haptic effects are determined as a user interacts with the electronic device 200. For example, a haptic effect may be determined if a user of the electronic device 200 attempts to perform an action that is not allowed. In one embodiment, a haptic effect is determined if a user's action is successful, such as successfully saving a document when a button is pressed indicating that the document should be saved. In some embodiments, an application being executed on the electronic device 200 determines one or more haptic effects. For example, if an application being executed on the electronic device 200 is an alarm clock, then one or more haptic effects may be determined when a determination is made that an alarm should go off. As another example, in an embodiment, electronic device 200 determines one or more haptic effects based at least in part on a virtual and/or augmented reality. For example, an electronic device 200, may determine one or more haptic effects when a collision occurs in an augmented or virtual reality during game play. In one embodiment, a haptic effect may be determined when an update to an application is ready to be downloaded or otherwise accessed.

In embodiments, one or more haptic effects are determined by an electronic device 200 based at least in part on information received from another device. For example, electronic device 200 may determine a haptic effect based at least in part on sensor information received from another electronic device. As another example, electronic device 200 may determine a haptic effect when a command and/or other information is received from another electronic device indicating that the haptic effect should be output. In embodiments, an electronic device can determine one or more haptic effects in at least some circumstances where a mobile phone, smartphone, tablet, and/or other electronic device typically determines a haptic effect. A determined haptic effect can include any haptic effect disclosed herein including, but not limited to, a vibrational haptic effect and/or a kinesthetic effect. Numerous embodiments are disclosed herein and variations are within the scope of this disclosure.

Referring back to method 400, once one or more haptic effects are determined 410, then method 400 proceeds to block 420. In block 420, one or more environmental conditions and/or information usable to determine one or more environmental conditions are received. For example, referring to Figure 2, one or more environmental conditions and/or information usable to determine one or more environmental conditions may be received from sensor 270. As another example, referring to Figure 3, in embodiments tablet computer 320 receives one or more environmental conditions and/or information usable to determine one or more environmental conditions from a sensor in mobile phone 340 through network 310.

One or more environmental conditions can be received from one or more sensors. In an embodiment, an environmental condition is received by an electronic device from a sensor in the electronic device. In another embodiment, an environmental condition is received by an electronic device from a sensor in communication with the electronic device. For example, a remote sensor may wirelessly send one or more environmental conditions to an electronic device. In one embodiment, an environmental condition is received by an electronic device from a sensor of another electronic device and/or a sensor in communication with another electronic device. For example, referring to Figure 3, mobile phone 340 may receive an environmental condition from a sensor integrated into or otherwise in communication with the tablet computer 320. In yet other embodiments, an electronic device receives information from one or more sensors that can be used to determine one more environmental conditions. In some embodiments, one or more environmental conditions are based at least in part on user input. For example, in one embodiment, a user selects an operating mode. As another example, a user may enter one or more user traits such as a height, weight, ethnicity, gender, etc. Numerous other embodiments are disclosed herein and variations are within the scope of this disclosure.

An environmental condition and/or information usable to determine an environmental condition can include ambient conditions, applied forces in one or more directions, altitudes, ambient temperatures, body temperature of a user, heart rate, skin resistance, oxygen use, ambient audio, ambient light, user movements, user position, humidity, velocity, distance, dates, times, weight, height, age, ethnicity, other environmental conditions disclosed herein, other environmental conditions, or a combination thereof. For example, in one embodiment, an acceleration and altitude received from one or more sensors may be used to determine whether a user of an electronic device is climbing a hill or descending a hill. As another example, in one embodiment, physiological information received from one or more sensors can be used to determine whether a user of an electronic device is awake or asleep and whether the user is stressed. In one embodiment, information received from one or more sensors are used to determine an emotional state or combination of emotional states of a user of an electronic device. For example, information received from one or more sensors may be used by an electronic device to determine whether a user is happy and excited, scared and angry, or any other emotional state or combination of emotional states.

In other embodiments, information from one or more sensors is used to determine an operating mode. For example, if a user is wearing the electronic device on their arm then the electronic device may determine one operating mode and if the user is wearing the electronic device on their leg then the electronic device may determine another operating mode. In embodiments, one or more environmental conditions are determined from one or more sensors including, but not limited to, accelerometers, altimeters, thermometers, heart rate monitors, resistance monitors, oxygen sensors, audio sensors, microphones, cameras, photosensors, infrared sensors, hygrometers, speedometers, pedometers, odometers, chronometers, timers, weight sensors, etc. In one embodiment, information received from one or more sensors can be used as proxy for one or more other sensors and/or environmental conditions. For example, in an embodiment, an electronic device may receive sensor information specifying a speed of a car, plane, etc.. In this embodiment, the electronic device may use the speed of the car as a proxy for a level of noise and/or a vibration level of the car. As discussed below, one or more determined haptic effects may be modified based at least in part on the received or otherwise determined environmental condition(s) and/or a proxy for one or more environmental conditions. Numerous other embodiments are disclosed herein and variations are within the scope of this disclosure.

Referring back to method 400, once one or more environmental conditions are received and/or determined, the method 400 proceeds to block 430. In block 430, one or more haptic effects are modified. For example, referring to Figure 2, if a determination is made that a vibrational haptic effect needs to be output and if information received from sensor 270 indicates that a user of the electronic device 200 is running, then the electronic device 200 may modify the vibrational haptic effect by increasing the intensity of the vibrational haptic effect. As another example, referring to Figure 3, if desktop computer 330 determines that tablet computer 320 needs to output a particular haptic effect, then desktop computer 330 can send a command to tablet computer 320 and tablet computer 320 may modify the particular haptic effect based on one or more environmental conditions received from a sensor associated with the tablet computer 320. For example, one or more determined haptic effects may be modified based at least in part one or more physiological state and/or emotional state(s) of a user of an electronic device.

One or more haptic effects can be modified in any number of ways. In one embodiment, one or more parameters corresponding to a haptic effect are changed. For example, an intensity parameter of a determined haptic effect may be increased or decreased from a default intensity level based at least in part on one or more environmental conditions. In some embodiments, a parameter may be increased or decreased from a parameter value corresponding to an operating mode and/or tactile model based at least in part on one or more environmental conditions. For example, if an electronic device is operating in an outdoor mode, then a determined haptic effect may have a particular intensity parameter. In this embodiment, the particular intensity parameter may be increased or decreased depending on how a user is interacting with the electronic device. For example, if the user is carrying the electronic device in a pocket, then the intensity parameter may be increased above the particular intensity parameter corresponding to the outdoor mode for the determined haptic effect. As another example, if the user is wearing the electronic device on their wrist, then the intensity parameter may be decreased below the particular intensity parameter corresponding to the outdoor mode for the determined haptic effect. In one embodiment, one or more determined haptic effects are changed or otherwise replaced based at least in part on one or more environmental conditions. For example, in one embodiment, a determination may be made that a particular vibrational haptic effect should be output. In this embodiment, the determine vibrational haptic effect may be changed to a different vibrational haptic effect based at least in part on one or more environmental conditions. Numerous other embodiments are disclosed herein and variations are within the scope of this disclosure.

One or more haptic effects can be modified based on any number of environmental conditions. For example, in one embodiment, if noise around the electronic device is determined to be above a threshold level, then an intensity parameter corresponding to a determined haptic effect may be increased. As another example, if a temperature from a sensor associated with an electronic device is above a threshold level, then an intensity parameter corresponding to a determined haptic effect may be decreased. In another embodiment, if a vibration of the electronic device is above a threshold vibration level, then the frequency and/or intensity associated with a determined haptic effect may be varied. In an embodiment, if another haptic effect has previously been output within a threshold time period, then a determined haptic effect may be modified. For example, if an electronic device outputs a haptic effect and then within a predetermined period of time a determination is made that the electronic device needs to output another haptic effect, then an intensity parameter corresponding to the newly determined haptic effect is increased from a predefined and/or previous intensity parameter. In embodiments, one or more determined haptic effects are modified to provide a consistent haptic user experience. In embodiments, as factors underlying haptic perception - such as vibration levels, noise, where an electronic device is being worn, how an electronic device is being carried, etc. - change determined haptic effects are modified so that the user is provided with a consistent haptic experience. For example, one or more determined haptic effects can be modified such that the haptic effect(s) feel the same or substantially similar to a user when the user is running as when the user is walking. In embodiments, various tactile models allow a designer to attempt to design effects that are perceived as having equal magnitude in at least two circumstances, such as when an electronic device is held in a user's hand and when the electronic device is lying in a user's lap. Numerous other embodiments are disclosed herein and variations are within the scope of this disclosure.

A modified haptic effect can be based at least in part on one or more tactile models. For example, an electronic device may be operating using a first tactile model. In this embodiment, when an event occurs, a haptic effect corresponding to the first tactile model is determined. The determined haptic effect corresponding to the first tactile model may be modified based at least in part on one or more environmental conditions. For example, a parameter associated with the determined haptic effect corresponding to the first tactile model may be modified based on one or more environmental conditions. As another example, a haptic effect corresponding to a second tactile model may be selected to be output instead of the determined haptic effect corresponding to the first tactile model based on one or more environmental conditions. Numerous other embodiments are disclosed herein and variations are within the scope of this disclosure.

In embodiments, a determined haptic effect is modified based at least in part on a proxy. For example, an electronic device may receive sensor information corresponding to a speed of a vehicle and the electronic device may use the speed of the vehicle as a proxy for a level of noise. In this embodiment, the determined haptic effect can be modified based at least in part on the level of noise as determined or approximated by the speed of the vehicle. In embodiments, multiple determined haptic effects can be modified based at least in part on one or more proxies. For example, an electronic device may receive sensor information corresponding to a speed of a vehicle and the electronic device may use the speed of a vehicle as a proxy for a level of vibration in the vehicle. In this embodiment, one or more determined haptic effects can be modified based at least in part on the level of vibration as determined or approximated by the speed of the vehicle. As another example, the speed of a vehicle may be used as a proxy for both ambient noise and vibration and one or more determined haptic effects may be modified based at least in part on the determined or approximated ambient noise and vibration level. Numerous other embodiments are disclosed herein and variations are within the scope of this disclosure.

### Standing Still / Walking / Running

In one embodiment, a user wears electronic device 200 on their arm using an armband and/or carries electronic device 200 in a pocket, such as a shirt pocket. The user may feel various haptic effects output by the electronic device 200 as events occur. For example, in this embodiment, the electronic device 200 determines a vibrational haptic effect when a phone call is received to alert the user of the electronic device 200 to the phone call. In addition, in this embodiment, the electronic device 200 receives one or more environmental conditions. For example, the electronic device 200 may have an accelerometer and can use information received from the accelerometer to determine if the user of the electronic device 200 is standing still, walking, or running. If the user is running, for example, then the user may not be able to notice and/or distinguish a haptic effect in the same manner as when the user is standing still. For at least this reason, the determined haptic effect may be modified or otherwise configured based at least in part on the received environmental condition(s). For example, an intensity parameter corresponding to the vibrational haptic effect may be increased if a user is walking instead of standing still thereby providing a stronger vibrational haptic effect when the user is walking. If a determination is made that the user is running, then the intensity parameter corresponding to the vibrational haptic effect may be greater than when the user is walking or standing still providing an even greater vibrational haptic effect. Thus, in embodiments, a determined haptic effect is modified or otherwise configured based at least in part on one or more environmental conditions. Numerous other embodiments are disclosed herein and variations are within the scope of this disclosure.

### Wearable Location

In one embodiment, a user can wear the electronic device 200, such as on their arm, or carry the electronic device 200 in a pocket. In this embodiment, the electronic device 200 can determine whether it is being carried in a pocket, being worn on a user's body, or being held in a user's hand(s). One or more determined haptic effects may be modified based at least in part on whether the electronic device 200 is being carried in a pocket, being worn on a user's body, or being held in a user's hand(s). For example, the electronic device 200 may be executing an application, such as an application that assists a user with a workout. The application may determine one or more haptic effects that should be output. In embodiments, the determined haptic effect(s) are modulated depending on the location of the electronic device 200. For example, if the electronic device 200 is being carried in a user's pocket then an intensity parameter corresponding to a determined haptic effect may be increased above a default intensity. In embodiments, an intensity parameter is modified or otherwise configured such that the determined haptic effect should feel the same or similar to a user when the electronic device 200 is being carried in the user's pocket as when the electronic device 200 is being worn by the user. In other embodiments, a parameter may be modified based on the location on a user's body that the electronic device 200 is being worn. For example, an intensity parameter may be modified to a first level if a determination is made that the electronic device 200 is being worn a user's arm and the intensity parameter may be modified to a second level if a determination is made that the electronic device 200 is being worn on a user's leg. In one embodiment, a parameter, such as an intensity parameter, of a determined haptic effect is modified based at least in part on whether a user is carrying or wearing the electronic device 200 and whether the user is standing, walking, or running. In another embodiment, a parameter of a determined haptic effect is modified based at least in part on a location on a user that the electronic device 200 is being worn and an activity level of the user. Numerous other embodiments are disclosed herein and variations are within the scope of this disclosure.

In embodiments, wearable electronic devices can be worn on various locations on a user's body. A wearable electronic device may provide a user with information through the use of one or more haptic effects. For example, applications for wearable electronic devices include, but are not limited to, fitness monitoring, fitness logging, timekeeping, controlling other devices such as a smartphone, receiving notifications originating from another device such as a smartphone, medical monitoring of a user, other medical applications, augmented reality, virtual reality, and other suitable applications. In one embodiment, a tactile model is determined by an electronic device 200, such as a wearable electronic device. In this embodiment, when the electronic device 200 and/or an application being executed on the electronic device 200 determines that a haptic output should be output, a parameter corresponding to the haptic output may be modified or otherwise configured based at least in part on the tactile model. For example, the electronic device 200 may determine that one tactile model should be used when a user is running and a second tactile model should be used when a user is walking. Each tactile model may be mapped with one or more haptic parameters that can be used to modify a determined haptic effect. Thus, if the electronic device 200 determines that a haptic effect should be output and determines that a tactile model for a user that is walking should be used, then the determined haptic effect may be modified or otherwise configured to have an intensity parameter corresponding to an intensity parameter for that haptic effect in the walking tactile model.

Similarly, if the electronic device 200 determines that a haptic effect should be output and determines that a tactile model for a user that is running should be used, then the determined haptic effect may be modified or otherwise configured to have an intensity parameter corresponding to an intensity parameter for that haptic effect in the running tactile model. In one embodiment, the electronic device 200 determines a parameter for a determined haptic effect by querying a data store with at least the determined haptic effect and a tactile model corresponding to a mode for the electronic device 200. In this embodiment, the electronic device 200 can modify or otherwise configure a parameter for a determined haptic effect based at least in part on the response received from the data store.

An electronic device 200 may determine whether it is being carried in a pocket, being held in a person's hand(s), and/or being worn on a particular body part (e.g., an arm, a leg, etc.) in any number of ways. In one embodiment, the electronic device 200 comprises an ultrasonic emitter/sensor that determines properties of objects near the electronic device 200. For example, if the electronic device 200 is in contact with a user's skin, then the electronic device 200 may use information received from the ultrasonic emitter/sensor to determine properties of the tissue near the location that the electronic device 200 is being worn and use the determined properties to determine a body part on which the electronic device 200 is being worn. Based on the determined body part, one or more haptic effects may be modified. For example, if information received from a sensor, such as an ultrasonic emitter/sensor, indicates that the electronic device 200 is being worn on a user's wrist (e.g., a watch or other suitable electronic device), then one or more determined haptic effects may be modified to account for the higher sensitivity of a user's wrist because of the bone conductance than another part of the user's body, such as a user's arm. As another example, if the electronic device 200 is determined to be worn on a fleshy, muscular area of a user's body, such as a user's upper arm, then one or more parameters of a determined haptic effect can be modulated to account for lower tactile sensitivity in the location that the electronic device 200 is being worn. Numerous other embodiments are disclosed herein and variations are within the scope of this disclosure.

### Held in Hand

In one embodiment, an electronic device comprises one or more infrared sensors and/or one or more capacitive sensors. In embodiments, one or more infrared sensors and/or one or more capacitive sensors are used to determine whether an electronic device is being held in a user's hand or lying in a different location, such as on a user's lap or on a desk. The electronic device may modify one or more determined haptic effects based at least in part on the location of the electronic device. In some embodiments, the electronic device may determine a tactile model based at least in part on the location of the electronic device. For example, if the electronic device is being held in a user's hand(s) then a handheld tactile model may be determined, if the electronic device is lying on a user's lap then a lap tactile model may be determined, and/or if the electronic device is sitting on another surface, such as a desk, then another tactile model may be determined. In this embodiment, a determined haptic effect may be modified based at least in part on the determined tactile model.

In one embodiment, an electronic device comprises multiple haptic output devices and one or more haptic output devices to be used for a determined haptic effect is selected based at least in part on the location of the electronic device and/or a determined tactile model. For example, if a determination is made that a user is holding the electronic device with one hand on the left side of the electronic device, then the determined haptic effect may be output to one or more haptic output devices corresponding to the left side of the electronic device. In embodiments, power can be saved by outputting haptic effects to one or more particular haptic output devices that can be perceived or best perceived by the user.

As another example, if a determination is made that the user is holding the electronic device with both hands, then in one embodiment a haptic output device corresponding to the left side of the electronic device as well as another haptic output device corresponding to the right side of the electronic device becomes active. In this embodiment, a determined haptic effect is output to both haptic output devices. In other embodiments, a determined haptic effect may be output to one, two, three, four or more haptic output devices. In embodiments, the haptic output device(s) selected to output one or more determined haptic effects corresponds with the haptic output device(s) that a user can feel the most based at least in part on how the electronic device is being handled.

In embodiments, one or more determined haptic effects are modified based at least in part on a location of an electronic device. For example, if an electronic device is placed in a user's lap then the parameters of a determined haptic effect may be modulated such that the haptic effects are strong enough to be felt by the user. Thus, in embodiments, parameters or one or more determined haptic effects are increased such that the haptic effects output when the electronic device is in a user's lap are greater than the haptic effects output when the electronic device is held in a user's hand(s). In one embodiment, when the electronic device is resting on an inanimate surface, such as a desk, then haptic output is dynamically disabled. For example, if the electronic device determines that a haptic effect should be output while the electronic device is sitting on an inanimate surface, then the electronic device may modify the determined haptic effect such that a haptic effect is not output by the electronic device. In embodiments, disabling haptic output when an electronic device is not in contact with a user can provide benefits including, but not limited to, saving battery life of the electronic device and/or reducing the potential for unpleasant haptic effects against an inanimate surface, such as unpleasant rattling or buzzing as the electronic device rests on a table. Numerous other embodiments are disclosed herein and variations are within the scope of this disclosure.

### Ambient Environment

In one embodiment, an electronic device can modify one or more determined haptic effects based at least in part on sensor data corresponding to an ambient environment. For example, a determined haptic effect may be modified to output a more intense haptic effect when a user is using the electronic device outside on a cold day than when the user is using the electronic device outside on a warm day. In embodiments, a more intense haptic effect may help to overcome a user's loss of sensitivity in the user's skin due to a lower temperature. In some embodiments, as a user moves from a colder environment to a warmer environment (or vice versa) haptic effects are modified to correspond with a user's tactile sensitivity as the user's body, extremities, etc. warm up or become colder. In one embodiment, the haptic output is modified according to a linear physiological model congruent with a human's tactile sensitivity in various temperatures and/or environments. In one embodiment, the electronic device determines temperature based at least in part on sensor information receive from a sensor in the electronic device and/or a sensor in communication with the electronic device. In other embodiments, the electronic device determines the temperature at a particular geographic location based at least in part on information received from another device, such as receiving the temperature from a web server through the Internet or other network. Numerous other embodiments are disclosed herein and variations are within the scope of this disclosure.

### Social Interactions

In one embodiment, an electronic device comprises a camera and/or an accelerometer. In this embodiment, the electronic device can use the camera and/or the accelerometer to track a user's eye and/or hand motions. For example, an electronic device may use the camera to determine if the user is looking at or away from another person. In one embodiment, the electronic device assists in behavioral and/or social learning. For example, if a user greets another person without making eye contact, then the electronic device may determine or modify one or more haptic effects based at least in part on the user's interaction with the other person. Thus, a haptic effect may be output when the user of the electronic device greets a person without making eye contact whereas a haptic effect may not be output when the user of the electronic device greets a person and makes eye contact. As another example, the electronic device may use an accelerometer to determine if a user of the electronic device has shaken another person's hand that they have been introduced to. In this embodiment, one or more haptic effects may be determined or modified based at least in part on the user's interaction. Numerous other embodiments are disclosed herein and variations are within the scope of this disclosure.

Referring back to method 400, once one or more haptic effects are modified, the method 400 proceeds to block 440. In block 440, one or more haptic output signals are generated. For example, referring to Figure 2, electronic device 200 may generate one or more haptic output signals. As another example, referring to Figure 3, tablet computer 320 may generate one or more haptic output signals. In one embodiment, tablet computer 320 may send one or more generated haptic output signals to another device, such desktop computer 330 shown in Figure 3. In an embodiment, one or more of the haptic output signals is based at least in part on a modified haptic effect. For example, a haptic output signal may be configured to cause one or more haptic output devices to output a modified haptic effect. Thus, for example, if an intensity parameter corresponding to a determined haptic effect has been modified, then the haptic output signal may be configured to cause a haptic output device to output a haptic effect that has an intensity corresponding to the modified intensity parameter. Numerous other embodiments are disclosed herein and variations are within the scope of this disclosure.

In some embodiments, the processor 210 generates a single signal when an event occurs. For example, in one embodiment, the processor 210 generates a signal configured to cause a haptic output device, such as haptic output device 240 or haptic output device 260, to output a haptic effect. The haptic effect may indicate that an object is currently displayed on the display 230, that an object is about to be displayed on the display 230, that an object is approaching, that an event has occurred, that an event is about to occur, or a combination thereof.

In other embodiments, the processor 210 generates two, three, or more signals. For example, in one embodiment, the processor 210 generates a first signal configured to cause a first haptic effect and a second signal configured to cause a second haptic effect. In some embodiments, the processor 210 generates a different signal for each event that occurs. In various embodiments, the processor 210 generates one or more signals configured to cause the touch-sensitive display 230, the communication interface 250, the haptic output device 240, the haptic output device 260, the sensor 270, other components of the device 200, other components of devices in communication with the device 200, or a combination thereof to output one or more of the generated signals, such as a video signal, audio signal, haptic output signal, and/or a communication signal. For example, in one embodiment, the processor 210 generates a signal when the event occurs where the signal is configured to cause a haptic output device in another device to cause a haptic effect. In one embodiment, the processor 210 sends the signal to the other device through the communication interface 250.

In one embodiment, a generated signal includes a command for a device or component to perform a specified function, such as to output a haptic effect or transmit a message to a remote device. In another embodiment, a generated signal includes parameters which are used by a device or component receiving the command to determine a response or some aspect of a response. Parameters may include various data related to, for example, magnitudes, frequencies, durations, or other parameters that a haptic output device can use to determine a haptic effect, output a haptic effect, or both. For example, in one embodiment, the processor 210 generates a signal configured to cause haptic output device 240 to output a haptic effect. In such an embodiment, the signal may include a pressure parameter that the haptic output device 240 uses to determine the intensity of the haptic effect to output. For example, according to one embodiment, the larger the pressure parameter the haptic output device 240 receives, the more intense the haptic effect that is output.

In one embodiment, an intensity parameter is used by a haptic output device to determine the intensity of a haptic effect. In this embodiment, the greater the intensity parameter, the more intense the haptic effect that is output. In one embodiment, the intensity parameter is based at least in part on sensor information, such as speed, direction, etc., of a remotely controllable device when an event occurs. Thus, according to one embodiment, a larger intensity parameter is sent to a haptic output device when an event occurs while the remotely controllable device is travelling at a faster speed than when an event occurs while the remotely controllable device is travelling at a slower speed. A signal may include data that is configured to be processed by a haptic output device, display, communication interface, sensor, or other components of a device or in communication with a device in order to determine an aspect of a particular response.

Referring back to method 400, once one or more haptic output signals have been generated, the method 400 proceeds to block 450. In block 450, one or more generated haptic output signals are output to one or more haptic output devices. For example, referring to Figure 2, one or more generated haptic output signals may be output to haptic output device 240 and/or haptic output device 260. As another example, referring to Figure 3, one or more haptic output signals generated by desktop computer 330 may be output to one or more haptic output devices in tablet computer 320 through network 310. In one embodiment, a generated haptic output signal is sent to one haptic output device. In other embodiments, a generated haptic output signal is sent to two, three, four, or more haptic output devices. In some embodiments, two, three, four, or more generated haptic output signals are sent to a haptic output device. In other embodiments, two, three, four, or more generated haptic output signals are set to two, three, four, or more haptic output devices. Numerous other embodiments are disclosed herein and variations are within the scope of this disclosure.

In various embodiments, the processor 210 may output one or more generated signals to any number of devices. For example, the processor 210 may output one signal to the communication interface 250. In one embodiment, the processor 210 may output one generated signal to the touch-sensitive display 230, another generated signal to the communication interface 250, and another generated signal to the haptic output device 260. In other embodiments, the processor 210 may output a single generated signal to multiple components or devices. For example, in one embodiment, the processor 210 outputs one generated signal to both haptic output device 240 and haptic output device 260. In another embodiment, the processor 210 outputs one generated signal to haptic output device 240, haptic output device 260, and communication interface 250. In still another embodiment, the processor 210 outputs one generated signal to both haptic output device 240 and haptic output device 260 and outputs a second generated signal to the touch-sensitive display 230.

As discussed above, the processor 210 may output one or more signals to the communication interface 250. For example, the processor 210 may output a signal to the communication interface 250 instructing the communication interface 250 to send data to another component or device in communication with the device 200. In such an embodiment, the communication interface 250 may send data to the other device and the other device may perform a function such as updating a display associated with the other device or the other device may output a haptic effect. Thus, in embodiments, a second device may output a haptic effect based at least in part upon an interaction with a first device in communication with the second device. In other embodiments, a second device may perform any number of functions such as, for example, updating a display associated with the second device or outputting a sound to a sensor associated with the second device based at least in part on an interaction with a first remote control 200.

In various embodiments, after the processor 210 outputs a signal to a component, the component may send the processor 210 a confirmation indicating that the component received the signal. For example, in one embodiment, haptic output device 260 may receive a command from the processor 210 to output a haptic effect. Once haptic output device 260 receives the command, the haptic output device 260 may send a confirmation response to the processor 210 that the command was received by the haptic output device 260. In another embodiment, the processor 210 may receive completion data indicating that a component not only received an instruction but that the component has performed a response. For example, in one embodiment, haptic output device 240 may receive various parameters from the processor 210. Based on these parameters haptic output device 240 may output a haptic effect and send the processor 210 completion data indicating that haptic output device 240 received the parameters and outputted a haptic effect.

It will be recognized that any type of input synthesis method may be used to generate an interaction parameter for one or more haptic effect signals including, but not limited to, the method of synthesis examples listed in TABLE 2 below. A drive signal may be applied to a haptic actuator according to the interaction parameter. Numerous other embodiments are disclosed herein and variations are within the scope of this disclosure.

**TABLE 2 - METHODS OF SYNTHESIS**

| |
|---|
| • Additive synthesis - combining inputs, typically of varying amplitudes |
| • Subtractive synthesis - filtering of complex signals or multiple signal inputs |
| • Frequency modulation synthesis - modulating a carrier wave signal with one or more operators |
| • Sampling - using recorded inputs as input sources subject to modification |
| • Composite synthesis - using artificial and sampled inputs to establish a resultant "new" input |
| • Phase distortion - altering the speed of waveforms stored in wavetables during playback |
| • Waveshaping - intentional distortion of a signal to produce a modified result |
| • Resynthesis - modification of digitally sampled inputs before playback |
| • Granular synthesis - combining of several small input segments into a new input |
| • Linear predictive coding - similar technique as used for speech synthesis |
| • Direct digital synthesis - computer modification of generated waveforms |
| • Wave sequencing - linear combinations of several small segments to create a new input |
| • Vector synthesis - technique for fading between any number of different input sources |
| • Physical modeling - mathematical equations of the physical characteristics of virtual motion |

### General

While the methods and systems herein are described in terms of software executing on various machines, the methods and systems may also be implemented as specifically-configured hardware, such as field-programmable gate array (FPGA) specifically configured to execute the various methods. For example, embodiments can be implemented in digital electronic circuitry, or in computer hardware, firmware, software, or in a combination thereof. In one embodiment, a device may comprise a processor or processors. The processor comprises a computer-readable medium, such as a random access memory (RAM) coupled to the processor. The processor executes computer-executable program instructions stored in memory, such as executing one or more computer programs for editing an image. Such processors may comprise a microprocessor, a digital signal processor (DSP), an application-specific integrated circuit (ASIC), field programmable gate arrays (FPGAs), and state machines. Such processors may further comprise programmable electronic devices such as PLCs, programmable interrupt controllers (PICs), programmable logic devices (PLDs), programmable read-only memories (PROMs), electronically programmable read-only memories (EPROMs or EEPROMs), or other similar devices.

Such processors may comprise, or may be in communication with, media, for example computer-readable media, that may store instructions that, when executed by the processor, can cause the processor to perform the steps described herein as carried out, or assisted, by a processor. Embodiments of computer-readable media may comprise, but are not limited to, an electronic, optical, magnetic, or other storage device capable of providing a processor, such as the processor in a web server, with computer-readable instructions. Other examples of media comprise, but are not limited to, a floppy disk, CD-ROM, magnetic disk, memory chip, ROM, RAM, ASIC, configured processor, all optical media, all magnetic tape or other magnetic media, or any other medium from which a computer processor can read. The processor, and the processing, described may be in one or more structures, and may be dispersed through one or more structures. The processor may comprise code for carrying out one or more of the methods (or parts of methods) described herein.

The foregoing description of some embodiments of the invention has been presented only for the purpose of illustration and description and is not intended to be exhaustive or to limit the invention to the precise forms disclosed. Numerous modifications and adaptations thereof will be apparent to those skilled in the art without departing from the scope of the invention.

Reference herein to "one embodiment" or "an embodiment" means that a particular feature, structure, operation, or other characteristic described in connection with the embodiment may be included in at least one implementation of the invention. The invention is not restricted to the particular embodiments described as such. The appearance of the phrase "in one embodiment" or "in an embodiment" in various places in the specification does not necessarily refer to the same embodiment. Any particular feature, structure, operation, or other characteristic described in this specification in relation to "one embodiment" may be combined with other features, structures, operations, or other characteristics described in respect of any other embodiment.

## Claims

1. A method (400) comprising:
determining, by an electronic device (100, 200), a haptic effect (410);
receiving, by the electronic device (100, 200), an input signal indicating an environmental condition (420);
modifying, by the electronic device (100, 200), the haptic effect (430) based at least in part on the input signal;
generating, by the electronic device (100, 200), a haptic output signal (440) based at least in part on the modified haptic effect, the haptic output signal configured to cause a haptic output device (260) to output the modified haptic effect; and
outputting, by the electronic device (100, 200), the haptic output signal (450).

2. The method (400) of claim 1, wherein the environmental condition comprises at least one of a temperature, a vibration, a noise, or a movement.

3. The method (400) of claim 1, wherein the environmental condition comprises a trait of a user.

4. The method (400) of claim 3, wherein the trait comprises at least one of a weight, a gender, an age, a height, a physiological state, or an emotional state.

5. The method (400) of claim 1, wherein the input signal is generated by an environmental sensor (270).

6. The method (400) of claim 1, wherein modifying the haptic effect comprises changing the intensity of the haptic effect to create the modified haptic effect.

7. The method (400) of claim 1, wherein the haptic effect comprises a vibration.

8. The method (400) of claim 1, wherein the haptic effect comprises a kinesthetic effect.

9. A electronic device (100, 200) comprising:
a display (120, 230) configured to display a user interface;
a memory (220);
a haptic output device (260) configured to output a haptic effect; and
a processor (210) in communication with the display, the memory, and the haptic output device, the processor configured to execute the method (400) of any preceding claim.

10. A computer-readable medium (230) comprising program code to cause a processor to execute the method (400) of any of claims 1-8.
